Europäisches Patentamt

European Patent Office

Office européen des brevets

(19)

(11) Veröffentlichungsnummer: **0 239 037 B1**

(12) # EUROPÄISCHE PATENTSCHRIFT

(45) Veröffentlichungstag der Patentschrift: **29.01.92**

(51) Int. Cl.⁵: **C02F 3/30**

(21) Anmeldenummer: **87104155.4**

(22) Anmeldetag: **20.03.87**

Die Akte enthält technische Angaben, die nach dem Eingang der Anmeldung eingereicht wurden und die nicht in dieser Patentschrift enthalten sind.

(54) **Teichanlage zur biologischen Reinigung von verschmutztem Abwasser.**

(30) Priorität: **26.03.86 DE 3610181**

(43) Veröffentlichungstag der Anmeldung:
**30.09.87 Patentblatt 87/40**

(45) Bekanntmachung des Hinweises auf die
Patenterteilung:
**29.01.92 Patentblatt 92/05**

(84) Benannte Vertragsstaaten:
**AT BE CH DE ES LI LU**

(56) Entgegenhaltungen:
**CH-A- 494 319**

**"Lehr- und Handbuch der Abwassertechnik", Auflage 3, Band IV: "Biologische-chemische und weitergehende Abwasserreininigung", Juli 1985, Seiten 34-61, Verlag für Architektur und technische Wissenschaften, Berlin, DE**

**"Design Manual - Municipal Wastewater Stabilization Ponds", EPA-625/1-83-015, Oktober 1983, Envrironmental Protection Agency, Washington, DC, US**

**PATENT ABSTRACTS OF JAPAN, Band 10, Nr. 230 (C-365)[2286], 9. August 1986; & JP-**

**A-61 64 393 (SANKYO CO. LTD) 02-04-1986**

(73) Patentinhaber: **Sonnenburg, Reinhold, Dr.
Stettiner Strasse 45/47
W-6303 Hungen 1(DE)**

(72) Erfinder: **Sonnenburg, Reinhold, Dr. Dipl.-Ing.
Stettiner Strasse 45/47
W-6303 Hungen 1(DE)**
Erfinder: **Eichholz, Günter
Hansestrasse 18
W-2410 Mölln(DE)**

(74) Vertreter: **Döring, Rudolf, Dr.-Ing. et al
Patentanwälte Dr.-Ing. R. Döring Dipl.-Phys.
Dr. J. Fricke Dipl.-Phys. M. Einsel Jasperallee 1a
W-3300 Braunschweig(DE)**

EP 0 239 037 B1

# Beschreibung

Die Erfindung betrifft eine Teichanlage zur biologischen Reinigung von verschmutztem Abwasser mit mehreren, nacheinander von dem Abwasser durchströmbaren Teichen, von denen ein Teich als Vorklär- und Absetzteich mit einer unterhalb des Wasserspiegels ausmündenden Zulaufleitung, mindestens ein nachfolgender Teich als Belüftungsteich mit Einrichtungen zum Eintrag von Sauerstoff und ggf. ein nachgeordneter Schönungs- oder Versickerungsteich sowie zwischen den Teichen angeordnete Verbindungsbauwerke zum gesteuerten Zu- und Ablauf des Abwassers vorgesehen sind.

Bei den bekannten Teichanlagen vorgenannter Art erfolgt die Auslegung und Gestaltung hauptsächlich bzw. allein unter dem Gesichtspunkt, daß bestimmte CSB- und BSB-Werte erreicht werden, wobei in jüngster Zeit noch zusätzlich auf eine Elimination der in dem Abwasser enthaltenen Phosphate abgestellt wurde.

Bei der bisherigen Behandlung von Abwasser hat man dem Gehalt an Stickstoffverbindungen im Abwasser keine oder nur eine geringe Aufmerksamkeit geschenkt, obgleich der Stickstoffgehalt im Abwasser zu erheblichen schädlichen Wirkungen führt.

So entzieht Stickstoff in reduziertem Zustand dem Wasser bei der Oxidation Sauerstoff. Oxidierter Stickstoff fördert das Wachstum von Planktonorganismen. Bei kleineren und stehenden Gewässern ist die Einleitung von oxidiertem Stickstoff als Nitrat oder Nitrit bedenklich, insbesondere wenn eine Trinkwassernutzung vorgesehen oder eine Infiltration ins Grundwasser zu besorgen ist. Oxidierter Stickstoff ist außerdem stark fischgiftig.

Schließlich gelangt der im Abwasser verbleibende Stickstoff bei Einleitung des Abwassers in die Flüsse letztendlich in die Weltmeere, wo er weitestgehend kommuliert und dem Stickstoffkreislauf verloren geht.

Der Erfindung liegt die Aufgabe zugrunde, eine Teichanlage der einleitend beschriebenen Art so auszubilden, daß nicht nur die geforderten CSB- bzw. BSB-Werte erreicht, sondern zugleich auch eine Umwandlung und weitgehende Elimination des im Abwasser enthaltenen Stickstoffes erzielt wird.

Zur Lösung vorstehender Aufgabe kennzeichnet sich die einleitend genannte Teichanlage erfindungsgemäß dadurch, daß der Absetzteich einströmseitig eine der Ausmündung der Zulaufleitung des Abwassers benachbarte anaerobe Tiefzone zur Denitrifizierung aufweist, daß zum Sauerstoffeintrag in den Belüftungsteich an sich bekannte Lufteinblasvorrichtungen vorgesehen sind, welche zur Erzeugung einer walzenartigen Umlaufströmung und eines Sauerstoffüberschusses in dem Abwasser ausgebildet sind und daß von der Abströmseite des Belüftungsteiches oder dem nachgeordneten Schönungsteich eine Rückführleitung für das behandelte, sauerstoffreiche Verbindungen in Form von Nitrit und Nitrat enthaltende Abwasser zur Einströmseite des Absetzteiches vorgesehen und so angeordnet ist, daß eine intensive Vermischung des rückgeführten Abwassers mit dem durch die Zulaufleitung zugeführten Abwasser erfolgt.

Bei der beschriebenen Teichanlage wird in dem Absetzteich im Bereich der Tiefzone aus dem Zufluß und dem bereits abgesetzten Schlamm eine stark sauerstoffzehrende Zone geschaffen, welche dazu führt, daß der in dem rückgeführten Abwasser in Form von Nitrat oder Nitrit enthaltene oxidierte Stickstoff reduziert wird. Hierdurch entsteht flüchtiger Stickstoff und Sauerstoff, letzterer in erster Linie zur biochemischen Kohlenstoffoxidation des zufließenden Abwassers bzw. des Schlammes dient.

Durch die Rückführleitung für das behandelte Abwasser zur Einströmseite des Absetzteiches und durch die Mischung des zurückgeführten Abwassers mit dem unbehandelten zulaufenden Abwasser werden günstige Voraussetzungen für die angestrebte Denitrifikation des Abwassers in den tieferen Zonen des Absetzteiches geschaffen, da hierzu Kohlenstoffverbindungen im Abwasser vorhanden sein müssen, die in hinreichender Menge durch das zulaufende unbehandelte Abwasser in die tieferen Zonen des Absetzteiches gelangen. Die in den belüfteten Teich vorgesehene Einrichtung zum Sauerstoffeintrag und zur Erzeugung einer walzenartigen Umlaufströmung dient sowohl zur Erzielung des vorgeschriebenen BSB- bzw. CSB-Wertes des Abwassers als auch zur Umwandlung des in dem Abwasser befindlichen Stickstoffes durch Oxidation in Nitrite und Nitrate. Diese Nitrifizierung ist zwingend erforderlich, um die vorbeschriebene Denitrifizierung vornehmen zu können.

Das in den Absetzteich eingeführte Abwasser enthält abhängig von seinem Ursprung Stickstoffverbindungen in Form von Ammoniak und häufig auch nicht unbeachtliche Mengen an organischem Stickstoff. Die aus dem Ammoniak stammenden $NH_4^+$-Ionen erfahren in dem Absetzteich keine wesentliche Umsetzung oder Veränderung, sondern gelangen durch den Absetzteich in den belüfteten Teich. Der organische Stickstoff wird hingegen in dem Absetzteich weitgehend hydrolisiert und erhöht hierdurch den Anteil der $NH_4^+$-Ionen des Abwassers im Absetzteich, ehe das Abwasser in den belüfteten Teich gelangt. Durch die Nitrifizierung in dem belüfteten Teich erfolgt eine entsprechende Anreicherung des Abwassers an Nitraten, die durch die Rückführung des Abwassers in den Zulauf des Absetzbeckens in der beschriebenen Weise umgewandelt werden, so daß eine Eliminierung des Stickstoffes erfolgt. Durch die Menge des aus dem Belüftungsteich in den Zulauf des Absetzteiches zurückgeführte Menge des Abwassers kann der Nitratgehalt des aus dem belüfteten Teich in den Schönungsteich weitergeleiteten Abwassers auf vorbestimmte unschädliche Werte eingestellt werden. Dabei kann durch entsprechende Ausbildung des oder der nachgeordneten Schönungsteiche durch dort vorgesehene Tiefzonen und flache Bereiche ein zusätzlicher weiterer Abbau des Stickstoffes und dessen Eliminierung erzielt werden, ehe dass Abwasser einem stehenden oder fließenden Gewässer bzw. einer anderen weiteren Nutzung zugeführt wird.

Um die im Absetzteich angestrebte Denitrifizierung in der Tiefzone zu begünstigen, ist es zweckmäßig, wenn zwischen der Ausmündung der Zulaufleitung in dem Absetzteich und der Tiefzone des Absetzteiches eine bis über den Wasserspiegel und dicht über den Teichgrund reichende Einlauftauchwand vorgesehen ist. Hierdurch wird gewährleistet, daß das in den Absetzteich einströmende Zulaufwasser vermischt mit dem rückgeführten behandelten Abwasser die Tiefzone des Absetzteiches durchströmen muß und somit zunächst in die sauerstoffzehrende Zone des Absetzteiches gelangt, in der sich die Denitrifikation vollzieht, ehe es den weiteren Teil des Absetzteiches durchströmen kann.

Es hat sich ferner als zweckmäßig erwiesen, die Zulaufleitung für das Abwasser zum Absetzteich mit einer dem Absetzteich vorgeordneten Mischkammer zu verbinden, in der auch die Rückführleitung für das bereits behandelte nitratreiche Abwasser ausmündet. Dabei ist es zweckmäßig, wenn die Zulaufleitung für das unbehandelte Abwasser und die Rückführleitung für das behandelte nitratangereicherte Abwasser in der Mischkammer gegensinnig ausmünden. Auf diese Weise wird die Effektivität der Denitrifizierung erhöht und sichergestellt, daß der dabei freiwerdende Sauerstoff mit dem im Abwasser befindlichen Kohlenstoff in der gewünschten Weise reagiert. In der Mischkammer erfolgt praktisch eine gegenseitige Durchdringung der zusammengeführten Abwasserströme, so daß sich in dem Absetzteich keine getrennten Strömungsbahnen des einen und anderen Mediums ausbilden können.

Zwar ist auch eine Zusammenführung der beiden Abwasserströme im Einlaufbereich des Absetzteiches möglich, jedoch würde hierdurch die angestrebte Absetzung des im Abwasser befindlichen bzw. sich durch die Denitrifizierung bildenden Schlammes ungünstig beeinflußt.

Zur Erzielung des gewünschten Sauerstoffeintrags in das Abwasser des Belüftungsteiches können die verschiedensten Belüftungsvorrichtungen verwendet werden. Ein energiesparender Sauerstoffeintrag mit sehr geringem baulichem Aufwand ergibt sich jedoch, wenn die Lufteinblasvorrichtungen in dem Belüftungsteich quer zur Durchströmrichtung verlaufende, an der Teichsohle angeordnete Lüfterkerzen aufweist und über den Lufteinblasvorrichtungen in geringem Abstand voneinander angeordnete, parallel zueinander verlaufende und den Teich unterteilende Leitwände angeordnet sind, die dicht über der Teichsohle und in Nähe des Wasserspiegels enden, wobei oberhalb des durch die Leitwände gebildeten senkrechten Schachtes Umlenkelemente zur Umwandlung der im Schacht erzeugten Auftriebsströmung des Wassers in eine Oberflächenströmung vorgesehen sind. Die vorgenannte an sich bekannte Lufteinblasvorrichtung führt durch den intensiven Sauerstoffeintrag und die gleichzeitig erzeugte Umwälzströmung zu einer intensiven Nitrifikation, welche Voraussetzung für die nachfolgende Eliminierung des Stickstoffes im Zuge der Denitrifikation ist.

Die Oxidation des Stickstoffes in dem Belüftungsteich kann dadurch verbessert und beschleunigt werden, daß in dem vorgenannten Schacht oberhalb der Lufteinblasvorrichtungen eine den Schachtquerschnitt ausfüllende, nach Art eines Tropfkörpers ausgebildete Festkörperfüllung vorgesehen ist. Hierdurch wird eine zusätzliche Aufwuchsfläche für Nitrifikanten geschaffen ohne die Gefahr, daß diese mit Sekundärschlamm überdeckt werden, da eine Schlammablagerung infolge der intensiven Durchströmung des Schachtes verhindert wird. Andererseits erfolgt im Bereich des Schachtes eine regulierbare Sauerstoffkonzentration, die für eine wirkungsvolle Nitrifikation notwendig ist.

Eine besondere Ausführungsform der Teichanlage ist im Anspruch 7 beschrieben. Bei dieser Ausführung wird der Absetzteich in zwei getrennte Zonen unterteilt. In dem zulaufseitigen Teil erfolgt dabei die bereits beschriebene Denitrifikation, während in dem ablaufseitigen Teil des Teiches bereits die Nitrifikation beginnt, welche in dem nachgeordneten Belüftungsteich fortgesetzt wird. Dabei kann in dem einströmseitigen Teil des Teiches eine Umlaufströmung ohne Lufteintrag erzeugt werden, die dann zweckmäßig ist, wenn der Zulauf des Abwassers über längere Zeitspannen sehr gering ist oder völlig unterbleibt.

Die Zeichnung gibt Ausführungsbeispiele der Erfindung in schematischer Darstellung wieder.

Es zeigen:

Fig. 1 einen Längsschnitt durch eine erste Teichanlage nach der Erfindung, wobei die beiden in Fig.1 untereinander wiedergegebenen Abschnitte in in der Praxis in Längsrichtung hintereinander angeordnet sind,

Fig. 2 eine gegenüber der Fig. 1 modifizierte Teichanlage nach der Erfindung, ebenfalls im Längsschnitt und in schematischer Darstellung,

Fig. 3 in vergrößerter Darstellung einen Querschnitt durch eine Einrichtung zum Sauerstoffeintrag in den Belüftungsteich.

In den Figuren sind mit 1 der Absetzteich, mit 2 der belüftete Teich, mit 3a die Tiefzone und mit 3b die Flachwasserzone eines Schönungsteiches bezeichnet.

Zwischen dem Absetzteich 1 und dem belüfteten Teich 2 ist jeweils ein Verbindungsbauwerk 4 vorgesehen. Ebenso ist zwischen dem Belüftungsteich 2 und der Tiefzone 3a des Schönungsteiches ein Verbindungsbauwerk 5 angeordnet. Zwischen der Tiefzone 3a und der Flachwasserzone 3b des Schönungsteiches ist in beiden Fällen ein durchströmter Damm 6 vorgesehen, welcher aus grobkörnigem Material besteht und wie ein schwach belasteter Tropfkörper wirkt und einen spürbaren $BSB_5$-Abbau des in den vorhergehenden Teichen behandelten Abwassers ermöglicht.

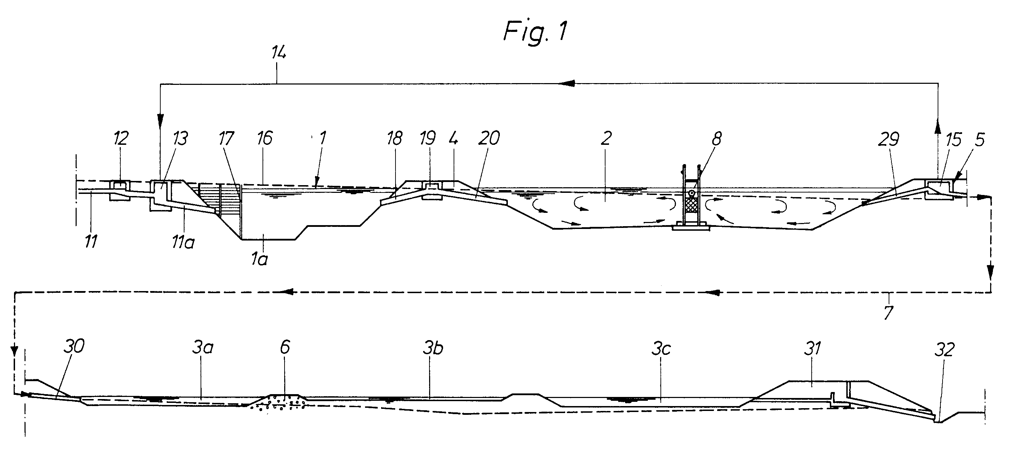

Bei der Anordnung nach Fig. 1 ist durch die strichpunktierte Linie 7 angedeutet, daß das Abwasser aus dem Verbindungsbauwerk 5 in die Tiefzone 3a des Schönungsteiches fließt, da sich der untere Teil der Fig. 1 an den oberen Teil dieser Figur bei der praktischen Ausführung der Teichanlage anschließt.

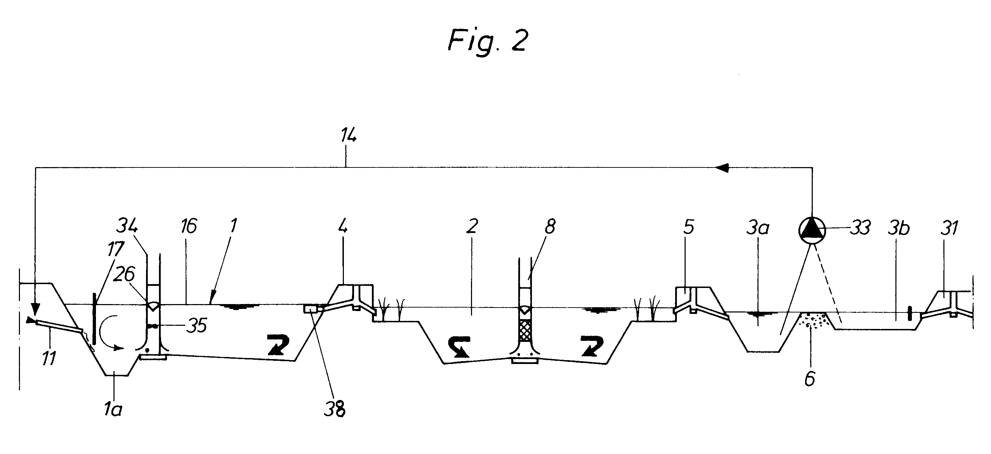

Der Absetzteich 1 der dargestellten Teichanlage nach den Fig. 1 und 2 weist einströmseitig eine Tiefzone 1a auf. Im Belüftungsteich 2 der dargestellten Teichanlage sind übereinstimmend ausgebildete Einrichtungen 8 zum Sauerstoff- bzw. Lufteintrag und zur Erzeugung walzenartiger Umlaufsströmungen angeordnet, wie dies durch die in dem Belüftungsteich 2 dargestellten Pfeile angedeutet ist.

Bei der Teichanlage nach Fig. 1 sind im Zuge der Zulaufleitung 11 für das in den Absetzteich 1 einzuführende Abwasser ein Beckenüberlauf 12 und eine Mischkammer 13 vorgesehen, in die eine Rückführleitung 14 ausmündet, die anderendig mit einem Pumpschacht 15 innerhalb des Verbindungsbauwerkes 5 verbunden ist, um bereits im Belüftungsteich 2 behandeltes Abwasser in die Mischkammer 13 zurückzuführen und dort mit dem durch die Zulaufleitung 11 zugeführten unbehandelten Abwasser intensiv zu vermischen. Der Abschnitt 11a der Zulaufleitung verbindet die Mischkammer 13 mit dem Absetzteich 1. Dabei endet der Abschnitt 11a der Zulaufleitung 11 in dem Absetzteich 1 weit unterhalb des Wasserspiegels 16. Zwischen der Ausmündung des Abschnittes 11a der Zulaufleitung 11 und der Tiefzone 1a des Absetzteiches 1 ist eine höheneinstellbare bis über den Wasserspiegel 16 und dicht über den Teichgrund reichende Einlauftauchwand 17 vorgesehen, welche dafür sorgt, daß das zugeführte Gemisch des Abwassers und Rücklaufwassers in die Tiefzone 1a des Absetzteiches gelangt bzw. diesen Bereich des Absetzteiches durchströmen muß. In der Tiefzone 1a des Absetzteiches setzt sich der Schlamm des Abwassers ab und bildet mit dem zufließenden Abwasser in diesem Bereich eine sauerstoffzehrende Zone, in welcher die bereits einleitend beschriebene Denitrifizierung des Abwassers erfolgt.

Das Verbindungsbauwerk 4 weist einen Überlaufschacht 19 auf, der über eine Leitung 18 mit dem Absetzteich 1 und eine Leitung 20 mit dem Belüftungsteich 2 verbunden ist. Die beiden Leitungen 18 und 20 enden in den Teichen 1 und 2 unterhalb der Wasseroberfläche. Hierdurch wird verhindert, daß der im Absetzteich 1 durch die Denitrifikation entstehende Schwimmschlamm in den Belüftungsteich 2 überführt wird. Der Überlaufschacht 19 dient zur Regelung des Wasserstandes in dem Belüftungsteich 2, wobei die Regeleinrichtungen im einzelnen in der Figur nicht wiedergegeben sind.

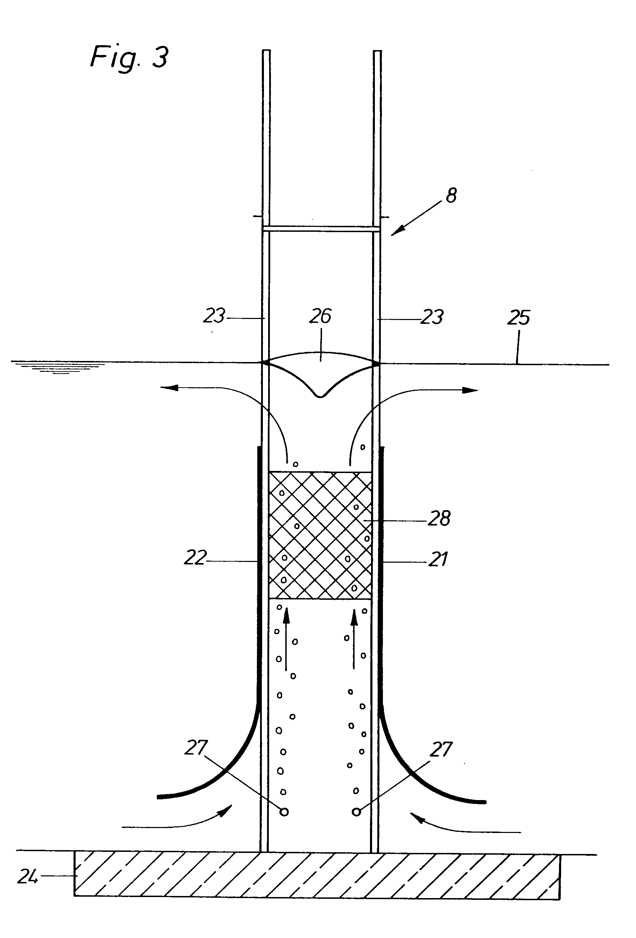

Die in dem Belüftungsteich 2 vorgesehene Einrichtung 8 zum Sauerstoffeintrag und zur Erzeugung einer walzenartigen Umlaufströmung ist in vergrößerter Darstellung in der Fig. 3 wiedergegeben. Die Anordnung besteht aus zwei parallel zueinander verlaufenden, quer durch den Teich hindurchgehenden Leitwänden 21,22, welche den Teich quer zur Strömungsrichtung unterteilen und die an einem Gerüst 23 gehalten sind, welches seinerseits mit einer im Teichboden angeordneten Fundamentplatte 24 verbunden ist. Die Leitwände 21,22 enden dicht über der Teichsohle und in Nähe des Wasserspiegels 25. Oberhalb der Leitwände 21 ist eine Umlenkeinrichtung 26 in dem Gerüst 23 gehalten. In Nähe der Teichsohle sind in Form von Belüftungskerzen Lufteinblasvorrichtungen 27 vorgesehen, die mit einer in der Zeichnung nicht wiedergegebenen Drucklufteinrichtung verbunden sind.

Durch die mittels der Lufteinblasvorrichtungen 27 eingetragenen Luftbläschen, welche in der Zeichnung schematisch wiedergegeben sind, wird zwischen den Leitwänden 21,22 eine Aufwärtsströmung erzeugt, die in dem Teich 2 zu entsprechenden walzenförmigen Umwälzströmungen führt, wie dies durch die Pfeile angedeutet ist. In dem von den Leitwänden 21,22 begrenzten Schacht ist oberhalb der Lufteinblasvorrichtungen 27 eine den Schachtquerschnitt ausfüllende, nach Art eines Tropfkörpers ausgebildete Festkörperfüllung 28 angeordnet, durch welche die Nitrifikation in dem Belüftungsteich 2 in der oben beschriebenen Weise verbessert wird.

Das in der Teichanlage nach Fig. 1 vorgesehene Verbindungsbauwerk 5 zwischen dem Belüftungsteich 2 und der Tiefzone 3a des Schönungsteiches ist gleichzeitig als Entnahmebauwerk ausgebildet. Aus dem Pumpschacht 15 wird das niveauabhängig aus dem Belüftungsteich 2 in das Verbindungsbauwerk einströmende Abwasser in einer regelbaren Menge in die Rückführleitung 14 und durch diese Leitung in die Mischkammer 13 gepumpt. Der Übertritt des aus dem Belüftungsteich 2 abfließenden Wassers in das Verbindungsbauwerk 5 erfolgt durch eine Leitung 29, die unterhalb des Wasserspiegels in den Belüftungsteich 2 ausmündet. Dabei können mehrere in verschiedener Höhe unterhalb des Wasserspiegels ausmündende, jeweils absperrbare Leitungen vorgesehen sein, wie dies gestrichelt angedeutet ist, um aus verschiedenen Tiefen des Belüftungsteiches 2 das vorbehandelte und nitratreiche Wasser zu entnehmen.

Das Verbindungsbauwerk 5 weist eine weitere Leitung 30 auf, die zur Weiterführung des aus dem Belüftungsteich 2 entnommenen und nicht rückgeführten Abwassers in die Tiefzone 3a des Schönungsteiches dient.

Im Schönungsteich mit der Tiefzone 3a und der Flachwasserzone 3b sowie der in Fig. 1 nachgeschalteten weiteren Tiefzone 3c erfolgt eine weitere Verbesserung der Abwasserqualität. Dabei erfolgt zunächst eine Beruhigung des Abwassers in der Tiefzone 3a und in allen drei Zonen des Schönungsteiches auch ein Sauerstoffeintrag über die Oberfläche. Die Flachwasserzone 3b kann durch eine Bepflanzung mit geeigneten Wasserpflanzen als hydrobotanische Klärstufe ausgeführt sein.

An die letzte Stufe 3c des Schönungsteiches schließt sich im Ausführungsbeispiel der Fig. 1 nochmals ein Verbindungsbauwerk 31 an, über welches das Abwasser geregelt in ein fließendes Gewässer 32 überführt wird.

Bei der Teichanlage nach Fig. 2 können die Verbindungsbauwerke 4 und 5 sowie das sich an den Schönungsteich ebenfalls anschließende Verbindungsbauwerk 31 die gleiche Ausbildung aufweisen, wie sie in Verbindung mit Fig. 1 beschrieben sind. Die Anlage nach Fig. 2 weist ebenfalls eine Zuführleitung 11 auf, die vor einer Einlauftauchwand 17 unterhalb des Wasserspiegels 16 des Absetzteiches 1 ausmündet.

Im Beispiel der Fig. 2 mündet die Rücklaufleitung 14 unmittelbar in die Zuführleitung 11, so daß eine Vermischung mit dem zugeführten Abwasser in der Zuführleitung erfolgt.

Die Entnahme des rückgeführten Abwassers durch die Rückführleitung 14 erfolgt in diesem Beispiel aus der Tiefzone 3a des Schönungsteiches oder ggfs. auch, wie gestrichelt angedeutet ist, aus der Flachwasserzone 3b dieses Teiches, und zwar mittels einer Pumpe 33.

In der Fig. 2 ist im Zusammenhang mit dem Verbindungsbauwerk 4 ein Regler 38 angedeutet, mit dessen Hilfe der Abfluß des Abwassers aus dem Absetzteich 1 in den Belüftungsteich 2 eingestellt werden kann. Der Belüftungsteich 2 weist in dem Beispiel der Fig. 2 im Zu- und Abströmbereich jeweils eine ggfs. mit Pflanzen besetzte Flachzone auf.

Die im Belüftungsteich 2 vorgesehene Einrichtung 8 zum Sauerstoffeintrag entspricht der Ausbildung nach Fig. 3.

Abweichend von der Ausbildung nach Fig. 1 ist bei der Teichanlage nach Fig. 2 in dem Absetzteich 1 eine Anordnung 34 vorgesehen, welche im Prinzip ebenso aufgebaut ist, wie die in Fig. 3 beschriebene Einrichtung 8 zum Sauerstoffeintrag. Die Anordnung 34 unterteilt den Absetzteich 1 in zwei getrennte Bereiche. Der von den Leitwänden begrenzte, quer durch den Teich verlaufende Schacht ist dabei in nebeneinander angeordnete getrennte Abschnitte unterteilt, von denen die einen ausschließlich mit dem einströmseitigen Teil des Teiches in offener Verbindung stehen, während die anderen mit dem abströmseitigen Teil des Teiches 1 verbunden sind. Die mit dem abströmseitigen Teil des Teiches verbundenen Abschnitte sind entsprechend der Darstellung der Fig. 3 ausgebildet, während die anderen mit dem einströmseitigen Teil verbundenen Abschnitte die in Fig. 2 wiedergegebene Ausbildung aufweisen. In diesen Abschnitten ist kein Lufteintrag vorgesehen, sondern stattdessen je eine mechanisch antreibbare Fördereinrichtung 34 unterhalb der Umlenkelemente 26 angeordnet, so daß das in dem einströmseitigen Teil des Teiches 1 befindliche Abwasser ohne Sauerstoffeintrag in eine walzenförmige Umlaufströmung versetzt werden kann. Das im abströmseitigen Teil des Teiches 1 befindliche Abwasser wird bei Lufteintrag in die entsprechenden Schachtabschnitte bei gleichzeitiger Sauerstoffzufuhr ebenfalls in eine, jedoch von der erstgenannten Umlaufströmung getrennte walzenförmige Umlaufströmung versetzt.

Es erfolgt somit insbesondere bei geringem oder längerer Zeit unterbrochenem Zulauf von Abwasser bei Einschaltung der mechanisch antreibbaren Fördereinrichtungen 34 ein Internkreislauf des Abwassers in dem zulaufseitigen Teil des Teiches 1 ohne Sauerstoffeintrag, während in dem anderen Teil des Teiches 1 ein Sauerstoffeintrag erfolgt und somit in diesem Abschnitt des Teiches bereits eine Nitrifikation des Abwassers eingeleitet wird.

Bei hinreichendem Zulauf des Abwassers in den Absetzteich 1 kann durch entsprechenden Anstieg des Wasserspiegels dafür gesorgt werden, daß der Regler 38 von dem Abwasser überströmt wird und somit die Anordnung 34 nicht für die Erzeugung der beschriebenen Internzirkulationen in Betrieb genommen werden muß.

**Patentansprüche**

1. Teichanlage zur biologischen Reinigung von verschmutztem Abwasser mit mehreren, nacheinander von dem Abwasser durchströmbaren Teichen, von denen ein Teich (1) als Vorklär- und Absetzteich mit einer unterhalb des Wasserspiegels (16) ausmündenden Zulaufleitung (11;11a), mindestens ein nachfolgender Teich als Belüftungsteich (2) mit Einrichtungen (8) zum Eintrag von Sauerstoff und ggf. ein nachgeordneter Schönungs- oder Versickerungsteich (3a,3b,3c) sowie zwischen den Teichen angeordnete Verbindungsbauwerke (4;5) zum gesteuerten Zu- und Ablauf des Abwassers vorgesehen sind, **dadurch gekennzeichnet**, daß der Absetzteich (1) einströmseitig eine der Ausmündung der Zulaufleitung (11;11a) des Abwassers benachbarte anaerobe Tiefzone (1a) zur Denitrifizierung aufweist, daß zum Sauerstoffeintrag in dem Belüftungsteich (2) an sich bekannte Lufteinblasvorrichtungen (27) zur Erzeugung einer walzenartigen Umlaufströmung und eines Sauerstoffüberschusses in dem Abwasser ausgebildet sind und von der Abströmseite des Belüftungsteiches (2) oder dem nachgeordneten Schönnungsteich (3a,3b) eine Rückführleitung (14) für das behandelte, sauerstoffreiche Verbindungen in Form von Nitrit und Nitrat enthaltende Abwasser zur Einströmseite des Absetzteiches (1) vorgesehen und so angeordnet ist, daß eine intensive Vermischung des rückgeführten Abwassers mit dem durch die Zulaufleitung (11;11a) zugeführten Abwasser erfolgt.

2. Teichanlage nach Anspruch 1, **dadurch gekennzeichnet**, daß zwischen der Ausmündung der Zulaufleitung (11;11a) in dem Absetzteich (1) und der Tiefzone (1a) des Absetzteiches (1) eine bis über den Wasserspiegel (16) und dicht über den Teichgrund reichende Einlauftauchwand (17) vorgesehen ist.

3. Teichanlage nach Anspruch 1 oder 2, **dadurch gekennzeichnet**, daß die Zulaufleitung (11;11a) für das Abwasser zum Absetzteich (1) mit einer dem Absetzteich vorgeordneten Mischkammer (13) verbunden ist, in der auch die Rückführleitung (14) für das behandelte Abwasser ausmündet.

4. Teichanlage nach Anspruch 3, **dadurch gekennzeichnet**, daß die Zulaufleitung (11;11a) für das Abwasser zur Zuführung zum Absetzteich (1) und die Rückführleitung (14) für das behandelte Abwasser in der Mischkammer (13) gegensinnig ausmünden.

5. Teichanlage nach einem der vorhergehenden Ansprüche, **dadurch gekennzeichnet**, daß die Lufteinblasvorrichtungen (27) in dem Belüftungsteich (2) quer zur Durchströmrichtung verlaufende, an der Teichsohle angeordnete Lüfterkerzen aufweist, daß über die Lufteinblasvorrichtungen (27) in geringem Abstand voneinander angeordnete, parallel zueinander verlaufende und den Teich unterteilende Leitwände (21,22) angeordnet sind, die dicht über der Teichsohle und in Nähe des Wasserspiegels (25) enden, wobei oberhalb des durch die Leitwände (21,22) gebildeten senkrechten Schachtes Umlenkelemente (26) zur Umwandlung der im Schacht erzeugten Auftriebsströmung des Wassers in eine Oberflächenströmung vorgesehen sind.

6. Teichanlage nach Anspruch 5, **dadurch gekennzeichnet**, daß in dem Schacht oberhalb der Lufteinblasvorrichtungen (27) eine den Schachtquerschnitt ausfüllende nach Art eines Tropfkörpers ausgebildete Festkörperfüllung (28) vorgesehen ist.

7. Teichanlage nach einem der vorhergehenden Ansprüche, **dadurch gekennzeichnet**, daß der Absetzteich (1) durch eine quer zur Durchströmrichtung und unmittelbar neben der Tiefzone (1a) vorgesehene Anordnung (34) aus zwei im Abstand parallel zueinander verlaufenden bis zum Teichboden reichenden und in Nähe des Wasserspiegels (16) unterhalb von Umlenkelementen (26) endenden Leitwände (21,22) unterteilt ist, daß der von den Leitwänden gebildete Schacht durch Querwände in nebeneinander angeordnete Einzelschächte unterteilt ist, die über freie Einströmquerschnitte im Bereich des Teichbodens und freie Abströmquerschnitte zwischen den Umlenkelementen (26) und dem Wasserspiegel (16) von Einzelschacht zu Einzelschacht abwechselnd mit dem zuströmseitigen, die Tiefzone (1a) umschließenden Teil und mit dem abströmseitigen Teil des Teiches in offener Verbindung stehen, und daß in den mit dem zuströmseitigen Teil des Teiches verbundenen Einzelschächten mechanisch antreibbare Fördereinrichtungen (34) und in den anderen Einzelschächten Lufteinblasvorrichtungen (27) zur Erzeugung von getrennten Aufwärtsströmungen in den Einzelschächten vorgesehen sind.

**Claims**

1. A tank installation for the biological cleaning of polluted waste water, with a plurality of tanks through which the waste water can flow in succession, one of these tanks (1) being a preclarifying and settling tank with an inflow duct (11,11a) leading in below the water level (16), at least one following tank being an aeration tank (2) with apparatus for the introduction of oxygen, which following tank may be followed by a clarifying or seepage tank (3a, 3b, 3c) and connecting structures (4, 5) for the controlled inflow and outflow of the waste water being arranged between the tanks, characterised in that the settling tank (1) has on the inflow side an anaerobic deep zone (1a), adjacent to the outlet of the inflow duct for the waste water, for denitrification, that for the introduction of oxygen, air injecting devices known per se are provided in the aeration tank (2) for the production of a revolving rotary flow and an excess of oxygen in the waste water, and from the outflow side of the aeration tank (2) or from the following clarification tank (3a, 3b) a return duct for the treated waste water containing oxygen-rich compounds in the form of nitrites and nitrates, is provided to the inflow side of the settling tank (1) and is so arranged that there results a thorough mixing of the returned waste water with the waste water supplied through the inflow duct (11,11a).

2. A tank installation according to claim 1, characterised in that between the outlet of the inflow duct (11,11a) in the settling tank (1) and the deep zone (1a) of the settling tank an inlet baffle (17) is provided extending from above the water level (16) to closely above the bottom of the tank.

3. A tank installation according to claim 1 or 2, characterised in that the inflow duct (11,11a) taking the waste water to the settling tank (1) is connected with a mixing chamber (13), arranged in front of the settling tank, into which the return duct (14) for the treated waste water also leads.

4. A tank installation according to claim 3, characterised in that the inflow duct (11,11a) taking the waste water to the settling tank (1) and the return duct (14) for the treated waste water lead in opposite directions into the mixing chamber.

5. A tank installation according to any one of the preceding claims, characterised in that the air injecting devices (27) in the aeration tank (2) have air tubes extending transversely to the direction of flow and arranged on the bottom of the tank, that above the air injecting devices (27) baffle walls (21, 22) are arranged which are at a small spacing from one another and extend parallel to one another and divide the tank, and end slightly above the tank bottom and in the vicinity of the water level (25), and above the vertical compartment formed by the baffle walls (21, 22) deflecting elements are provided for converting the upward flow of the water generated in the compartment into a surface flow.

6. A tank installation according to claim 5, characterised in that in the compartment and above the air injecting devices (27) a bulk filling (28) is provided which fills up the compartment cross section and is constructed as a percolating fitter.

7. A tank installation according to any one of the preceding claims, characterised in that the settling tank (1) is divided by an arrangement (34) transverse to the direction of through flow and immediately adjacent to the deep zone (1A) and consisting of two baffle walls (21, 22) disposed at a distance from and parallel to one another and extending to the tank bottom and ending in the vicinity of the water level (16) below deflecting elements (26), that the compartment formed by the baffle walls is divided by transverse walls into mutually adjacent individual compartments which are in free communication, by way of free inflow cross sections in the region of the tank bottom and free outflow cross sections between the deflecting elements (26) and the water level (16), alternatively, from one individual compartment to the next, with the inflow side part, enclosing the deep zone, and with the outflow side part of the tank, and that, in the individual compartments communicating with the inflow side of the tank, there are provided conveying devices (34) adapted to be mechanically driven, and in the other individual compartments there are provided air injection devices (27) for producing separate upward currents.

**Revendications**

1. Système de bassins pour l'épuration biologique d'effluents sales comprenant plusieurs bassins traversés successivement par les effluents au cours de leur écoulement, l'un des bassins (1) étant prévu en tant que bassin de décantation primaire et de sédimentation, pourvu d'une conduite (11; 11a) d'arrivée débouchant en dessous du niveau (16) d'eau, un bassin consécutif au moins étant prévu en tant que bassin (2) d'aération, pourvu de dispositifs (8) permettant l'addition d'oxygène, ainsi que, le cas échéant, un bassin consécutif (3a, 3b, 3c) de clarification et d'infiltration et des installations (4; 5) de communication permettant l'admission et l'évacuation contrôlées des effluents, caractérisé en ce que le bassin (1) de sédimentation comporte, du côté de l'alimentation, avoisinant l'embouchure de la conduite (11; 11a) d'arrivée des effluents, une zone profonde anaérobie (1a) de dénitrification, en ce que des dispositifs connus (27) d'injection d'air sont agencés dans le bassin (2) d'aération pour effectuer l'injection d'oxygène, permettant de créer un courant de circulation de forme grossièrement cylindrique et de créer un excédent d'oxygène dans l'effluent, et en ce qu'une conduite (14) de retour est prévue, depuis le côté de décharge du bassin (2) d'aération ou d'un bassin consécutif (3a, 3b) de clarification, pour amener les effluents traités, contenant des composés riches en oxygène tels que des nitrites et des nitrates, vers le côté d'alimentation du bassin (1) de sédimentation, et y est agencée de telle sorte qu'un brassage intense des effluents renvoyés et des effluents amenés à travers la conduite (11; 11a) d'arrivée soit obtenu.

2.  Système de bassins selon la revendication 1, caractérisé en ce qu'une cloison immergée (17) d'arrivée, s'étendant jusqu'au-dessus du niveau (16) d'eau et jusqu'au-dessus du fond du bassin (1) de sédimentation, à proximité immédiate de ce fond, est agencée entre l'embouchure de la conduite (11; 11a) d'arrivée dans le bassin (1) de sédimentation et la zone profonde (1a) de ce bassin.

3.  Système de bassins selon la revendication 1 ou la revendication 2, caractérisé en ce que la conduite (11; 11a) d'arrivée des effluents vers le bassin (1) de sédimentation est raccordée à une chambre (13) de brassage placée en amont du bassin de sédimentation, dans laquelle débouche également la conduite (14) de retour des effluents traités.

4.  Système de bassins selon la revendication 3, caractérisé en ce que la conduite (11; 11a) d'arrivée des effluents vers le bassin (1) de sédimentation et la conduite (14) de retour des effluents traités débouchent dans la chambre (13) de brassage en sens opposés.

5.  Système de bassins selon l'une des revendications précédentes, caractérisé en ce que le dispositif (27) d'injection d'air disposé dans le bassin (2) d'aération comporte des injecteurs d'air agencés au niveau du fond du bassin, transversalement par rapport au sens du courant, en ce que des cloisons (21, 22) de guidage placées au-dessus du dispositif (27) d'injection d'air et disposées à une faible distance l'une de l'autre sont prévues, qui s'étendent parallèlement l'une à l'autre, subdivisent le bassin, et débouchent au-dessus du fond du bassin, à proximité immédiate de celui-ci, et à proximité du niveau (25) d'eau, des éléments déflecteurs (26) étant prévus au-dessus du conduit vertical formé par les cloisons (21, 22) de guidage, qui transforment le courant ascendant de l'eau, généré dans le conduit, en un courant de surface.

6.  Système de bassins selon la revendication 5, caractérisé en ce qu'un remplissage (28) en corps solides, réalisé sous forme d'un lit bactérien, est prévu dans le conduit, au-dessus des dispositifs (27) d'injection d'air, qui remplit la section du conduit.

7.  Système de bassins selon l'une des revendications précédentes, caractérisé en ce que le bassin (1) de sédimentation est subdivisé par un dispositif (34) s'étendant transversalement au sens d'écoulement et agencé à proximité immédiate de la zone profonde (1a), composé de deux cloisons (21, 22) de guidage disposées parallèlement l'une à l'autre, à une certaine distance l'une de l'autre, qui s'étendent jusqu'au fond du bassin et se terminent en-dessous d'éléments déflecteurs (26), à proximité du niveau (16) d'eau, en ce que le conduit formé par les cloisons de guidage est divisé, par des parois transversales, en plusieurs conduits élémentaires disposés côte à côte, qui, par l'intermédiaire de sections ouvertes d'admission au niveau du fond du bassin et par l'intermédiaire de sections ouvertes de décharge entre les éléments déflecteurs (26) et le niveau (16) d'eau, sont en communication ouverte, alternativement d'an conduit élémentaire à l'autre, soit avec la partie située du côté d'arrivée du bassin, englobant la zone profonde (1a), soit avec la partie située du côté de la décharge du bassin, et en ce que des dispositifs (34) de transport à commande mécanique sont prévus dans les conduits élémentaires reliés à la partie située du côté d'arrivée du bassin, et en ce que des dispositifs (27) d'injection d'air sont prévus dans les autres conduits élémentaires, afin de générer des courants ascendants séparés à l'intérieur des conduits élémentaires.

Fig. 1

Fig. 2

Fig. 3